# EUROPÄISCHE PATENTSCHRIFT

(11) **EP 0 152 894 B1**
(45) Veröffentlichungstag und Bekanntmachung des Hinweises auf die Patenterteilung: **21.04.1993**
(21) Anmeldenummer: 85101460.5
(22) Anmeldetag: 11.02.1985
(51) Int. Cl.: G01B 11/30, G01N 21/88

(54) **Anordnung zur optischen Erfassung räumlicher Unebenheiten in der Struktur eines zu untersuchenden Objekts**
Device for optically detecting local inhomogeneities in the structure of tested objects
Dispositif pour la détection optique d'inégalités locales dans la structure d'un objet examiné

(30) Priorität: 20.02.1984 DE 3406066
(43) Veröffentlichungstag der Anmeldung: 28.08.1985
(73) Patentinhaber: SIEMENS AKTIENGESELLSCHAFT, 80333 München (DE)
(72) Erfinder: Marguerre, Hans-Helmut, Dipl.-Phys., D-7541 Straubenhardt 4 (DE)

(56) Entgegenhaltungen:
- WO-A-85/03776
- DE-A- 3 243 680
- GB-A- 1 461 866
- GB-A- 2 054 835
- US-A- 3 734 626
- US-A- 3 892 494

## Beschreibung

Die Erfindung bezieht sich auf eine Anordnung gemäß dem Oberbegriff des Anspruchs 1.

Bei einer bekannten Anordnung dieser Art (DE-OS 32 43 680) werden die von dem zu untersuchenden Objekt reflektierten Lichtstrahlen mit einer Videokamera erfaßt und mit einer elektronischen Auswerteeinrichtung hinsichtlich der Erkennung von Unebenheiten an der zu untersuchenden Oberfläche mit einem Monitor dargestellt bzw. in automatischen Bildauswertesystemen weiterverarbeitet. Bei der bekannten Anordnung wird die untersuchte Oberfläche mit einer überlagerten Rasterstruktur der Lichtstrahlen, z. B. durch ein optisches Gitter in der Beleuchtungseinrichtung, beaufschlagt. Ist die zu untersuchende Oberfläche eine glatte Ebene, so wird die Rasterstruktur der Lichtstrahlen ungestört reflektiert, weist die zu untersuchende Oberfläche jedoch räumliche Abweichungen von einer glatten Ebene auf, so macht sich dies in einer Verzerrung der Rasterstruktur auf dem Monitor bemerkbar. Somit kann hier eine Kontrastierung von dreidimensionalen Strukturen auf glänzenden Oberflächen vorgenommen werden. Anwendungsgebiete sind beispielsweise die Erkennung von Beschädigungen, Verschmutzungen, Materialfehlern, Fertigungsfehlern oder Formabweichungen an Lack-, Kunststoff-, Metall- oder Glasoberflächen. Die Erkennung von solchen störenden dreidimensionalen Unebenheiten ist von Bedeutung bei der Kontrolle von Automobilkarosserien im Lackierbetrieb oder von Blechen mit oder ohne Beschichtung nach verschiedenen Bearbeitungsvorgängen wie Walzen, Schneiden oder Beschichten (Eloxieren, Galvanisieren). Die alleinige Anwendung von Lichtstrahlenbündeln mit räumlicher Helligkeitsverteilung schafft jedoch nur begrenzte Möglichkeiten hinsichtlich der Trennung der Signalanteile von kleinen, räumlich begrenzten Formabweichungen (Mikro-Fehler) und periodischen Strukturen (z. B. Welligkeiten) an oder in den zu untersuchenden Objekten, wobei insbesondere eine Untersuchung nach Ortsfrequenz und Profilhöhe der Mikro-Fehler schwierig ist. Wegen der flächenhaften Beleuchtung kann der Nutzsignalpegel gegenüber dem störenden Streulichtpegel sehr klein werden. Außerdem ist bei der bekannten Anordnung ein hoher Glanzgrad des zu untersuchenden Objekts erforderlich.

Aus der US-A-3 892 494 ist eine weitere Anordnung dieser Art bekannt, bei der ein Teil der Oberfläche des zu untersuchenden Objekts mit einem fokussierten Strahl beaufschlagt wird. Von der Oberfläche werden die Lichtstrahlen zu einem Retroreflektor reflektiert, der die Eigenschaft besitzt, einen einfallenden linienförmigen Lichtstrahl in der gleichen Richtung um einen kleinen Winkel φ aufgefächert wieder zurückzuwerfen. Der Lichtstrahl wird also vom Retroreflektor zurück zur Oberfläche reflektiert und gelangt von dort über eine Blende zu einem optischen Empfänger. Bei der zweiten Reflexion an der Oberfläche kann der reflektierte Lichtstrahl durch Krümmungen oder Defekte der Oberfläche zusätzlich aufgeweitet werden, so daß er jetzt einen Öffnungswinkel φ' aufweist. Mit der Blende, die zur Ausfilterung von Lichtstrahlen dient, deren Öffnungswinkel einen vorgegebenen Wert überschreitet, kann daher die Empfindlichkeit der Meßeinrichtung reguliert werden. Die Größe der Oberflächenteile, auf die der Lichtstrahl der Lichtquelle fokussiert wird, bestimmt die minimale Ausdehnung der auffindbaren Defekte. Zur Untersuchung einer größeren Oberfläche muß diese in viele kleine Oberflächenteile zerlegt werden, die sequentiell zu untersuchen sind. Die Erfassung räumlicher Unebenheiten in einer größeren Oberfläche ist daher mit hohem Zeitaufwand verbunden.

Der Erfindung liegt die Aufgabe zugrunde, eine Anordnung zur optischen Erfassung räumlicher Unebenheiten in der Struktur eines zu untersuchenden Objekts zu schaffen, bei der die Erkennung auch von kleineren Unebenheiten mit einfachen Mitteln sicher durchführbar ist.

Zur Lösung dieser Aufgabe weist eine Anordnung der eingangs angegebenen Art die Merkmale des Kennzeichens des Anspruchs 1 auf. Mit dem erfindungsgemäßen Einsatz von Retroreflektoren, die eine weitgehend parallele Reflexion des einfallenden Lichtstrahls bewirken, kann eine besonders gute Kontrastierung von Oberflächenkrümmungen, d. h. Unebenheiten auf einer reflektierenden Oberfläche, als Folge der Reflexwertabhängigkeit am Retroreflektor vom Beobachtungswinkel durchgeführt werden. Eine mit der erfindungsgemäßen Anordnung beobachtete Unebenheit an einem zu untersuchenden Objekt bewirkt eine starke Auffächerung der Lichtstrahlen nach der Reflexion am Retroreflektor und nach der zweiten Reflexion an der Oberfläche, wodurch die relativ starke Ablenkung im Strahlengang zu entsprechend veränderten Lichtverhältnissen auf dem Sensor der Videokamera führt und somit leicht auswertbar ist.

Eine besonders vorteilhafte Ausführungsform der erfindungsgemäßen Anordnung ist in Unteranspruchen 2 angegeben.

Bei der Verwendung einer Beleuchtungseinrichtung mit räumlich sich ändernden Helligkeitswerten (DE-OS 32 43 680) ist es möglich, die Vorteile der bekannten Anordnung hinsichtlich der Untersuchung von Mikro-Strukturen an einem zu untersuchenden Objekt dadurch zu erweitern, daß mit der Helligkeitsverteilung in den Lichtstrahlen der Lichtquelle auch größere Unebenheiten einfach ausgewertet und entsprechend auf dem Monitor dargestellt werden können.

Die Erfindung wird anhand der Figuren erläutert, wobei
- Figur 1: ein Ausführungsbeispiel einer Anordnung zur Untersuchung einer reflektierenden Oberfläche,
- die Figuren 2 und 3: verschiedene Ausführungsformen des Retroreflektors,
- Figur 4: eine Darstellung des Strahlengangs bei der Retroreflexion,
- die Figuren 5 und 6: Kurven bezüglich der Abhängigkeit des Reflexwertes vom Anleucht- bzw. vom Beobachtungswinkel,
- die Figuren 7, 8, 9 und 10: den Verlauf von Lichtstrahlen bei der Reflexion am zu untersuchenden Objekt bzw. am Retroreflektor,
- Figur 11: die Auffächerung der Lichtstrahlen in der Blendenebene des Objektivs und
- Figur 12: die Durchmodulation des Videosignals der Kamera darstellen.

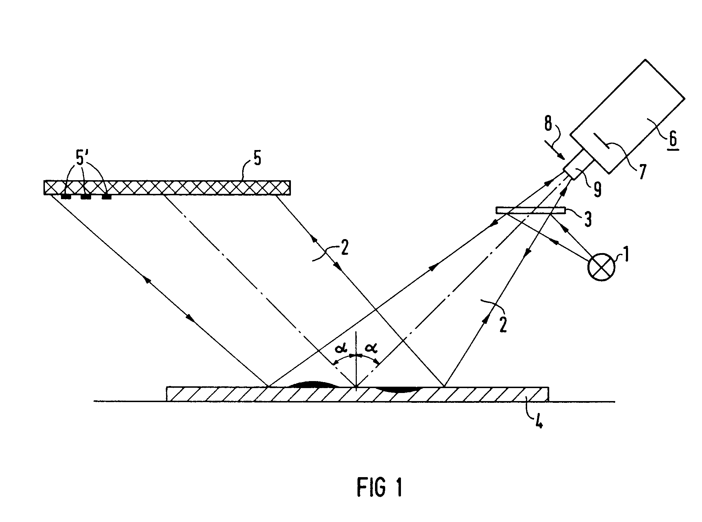

Bei der in der Figur 1 dargestellten Anordnung werden die Lichtstrahlen 2 einer Lichtquelle 1 von einem halbdurchlässigen Spiegel 3 auf die Oberfläche 4 eines zu untersuchenden Objekts reflektiert. Der Einfallswinkel der Lichtstrahlen ist im dargestellten Fall mit α gekennzeichnet, wobei bei einer ebenen Oberfläche der Winkel der von der Oberfläche reflektierten Lichtstrahlen ebenfalls gleich α ist. An einem Retroreflektor 5 werden die Lichtstrahlen 2 derart reflektiert, daß sie parallel zu den ankommenden Strahlen zur Oberfläche 4 zurückgeworfen werden und von der Oberfläche 4 durch den halbdurchlässigen Spiegel 3 von einer Videokamera 6 erfaßt werden. Zur besseren Erkennung von größeren Unebenheiten an der Objektoberfläche 4 kann der Retroreflektor 5 auch mit lichtabsorbierenden Punkten oder Streifen 5' an den erforderlichen Stellen bedeckt sein. In der Videokamera 6 wird somit das Bild der Oberfläche 4 in der Bildebene 7 abgebildet; das Bild der Lichtquelle 1 befindet sich in einer Blendenebene 8 im Objektiv 9 der Videokamera 6.

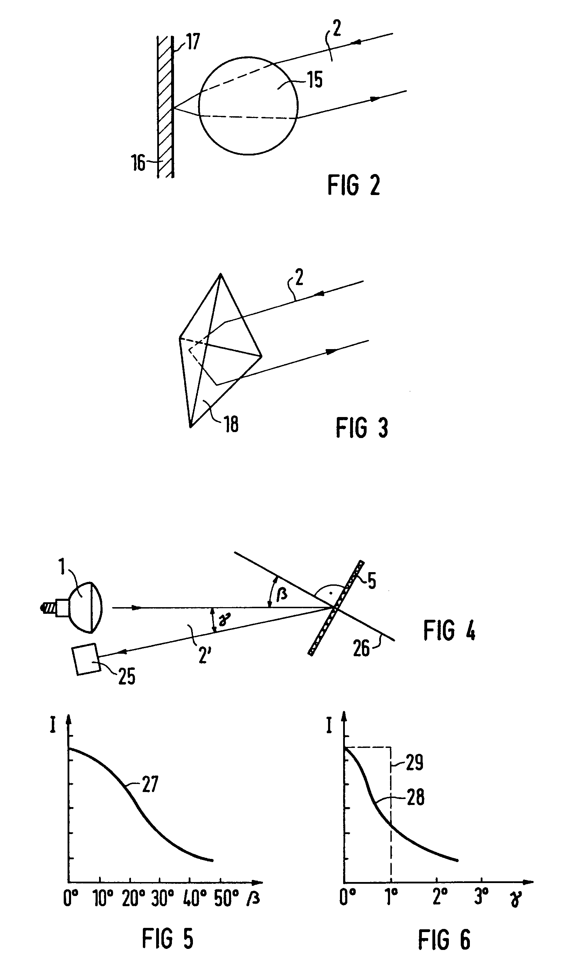

Zur Erläuterung des Prinzips der Retroreflexion dienen die Figuren 2 und 3 wobei gemäß der Figur 2 Glaskugeln 15 vor einer Folie 16 mit einer Reflexschicht 17 angeordnet sind. Der Durchmesser der Glaskugeln 15 kann beispielsweise in der Größenordnung von 0,1 mm liegen; der jeweilige Brennpunkt liegt unmittelbar hinter den Glaskugeln 15 wo sich die Reflexschicht 17 befindet. Anstelle der Glaskugeln können auch linsenförmige Glaskörper mit rasterförmiger Anordnung der Linsen verwendet werden. Der hier dargestellte Lichtstrahl 2' wird in der dargestellten Weise derart reflektiert, daß er im gleichen Winkel wie er auf die Anordnung auftrifft wieder von ihr reflektiert wird. Bei dem Ausführungsbeispiel nach der Figur 3 ist als Retroreflektor ein Tripelreflektor 18 als ein pyramidenförmiges Prisma vorhanden, der im Ergebnis zu dem gleichen Strahlenverlauf der Lichtstrahlen 2' und 2'' führt, wie anhand der Figur 2 erläutert.

Zum besseren Verständnis der Wirkungsweise der besonderen Abhängigkeit der reflektierten Lichtintensität im Verlauf der Lichtstrahlen 2 gemäß der Anordnung nach der Figur 1 ist in der Figur 4 zunächst eine Versuchsanordnung mit der Lichtquelle 1, dem Retroreflektor 5 und einem Lichtempfänger 25 dargestellt. Der von der Lampe (Lichtquelle 1) ausgesendete Lichtstrahl 2' bildet einen Winkel β (Anleuchtwinkel) zur Normalen 26 des Retroreflektors 5. Der in den Empfänger 25 eintretende Lichtstrahl 2' weist zum von der Lampe ausgehenden Lichtstrahl 2' einer Winkel γ (Beobachtungswinkel) auf. Anhand der Figur 5 ist nun die Abhängigkeit der Intensität I der Reflexion vom Anleuchtwinkel β bei einem bestimmten, hier günstigen Reflektortyp dargestellt. Es ist sehr leicht zu erkennen, daß insbesondere im Bereich der Veränderung des Anleuchtwinkels von 10 ^{o} bis 40 ^{o} eine Abnahme der reflektierten Lichtintensität auftritt. Eine wesentlich stärkere Abnahme ist bei der Kurve 28 anhand der Figur 6 zu erkennen, wo die Intensität I der Reflexion über dem Beobachtungswinkel γ aufgetragen ist. Hier tritt im Bereich von 1 ^{o} ein sehr starker Abfall der Intensität auf, so daß die Kurve 28 auch idealisiert durch die Kurve 29 dargestellt werden kann. Die Abhängigkeit vom Anleuchtwinkel β bewirkt somit eine Kontrastierung von Oberflächenneigungen, die Abhängigkeit vom Beobachtungswinkel γ bewirkt dagegen eine Kontrastierung von Oberflächenkrümmungen.

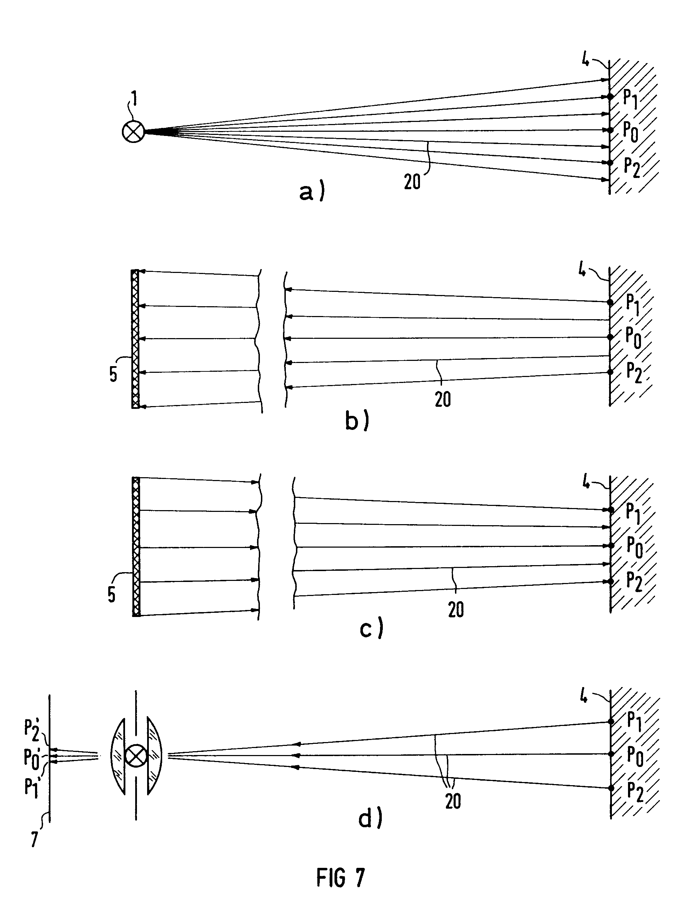

Zur Veranschaulichung der Funktion der Optikanordnung entsprechend Figur 1 sind die Vorgänge der optischen Abbildung in Einzelschritten gemäß Figur 7, 8, und 9 dargestellt. Die Teildarstellungen in Figur 7 zeigen:
a) die Ausleuchtung der Oberfläche 4 mit einer Punktlichtquelle 1 und Lichtstrahlen 20,
b) die erste Reflexion an der Oberfläche 4,
c) die Reflexion am Retroreflektor 5 und
d) die zweite Reflexion an der Oberfläche 4 und Abbildung auf dem Bildsensor 7 der Kamera 6.

Der Einfallswinkel α (siehe Figur 1) ist hier nicht berücksichtigt, weil er für die Darstellung des Funktionsprinzips zunächst ohne Bedeutung ist. Die Figur 7 zeigt sowohl die Abbildung der Oberflächenpunkte P₀, P₁ und P₂ auf dem Bildsensor 7 der Videokamera 6 (Bildpunkte P₀', P₁' und P₂') als auch die Abbildung der Lichtquelle 1 in die Blendenebene 8 des Kamera-Objektivs 9. Die winkelabhängige Intensität der Reflexion des Retroreflektors 5 ist hier noch nicht berücksichtigt.

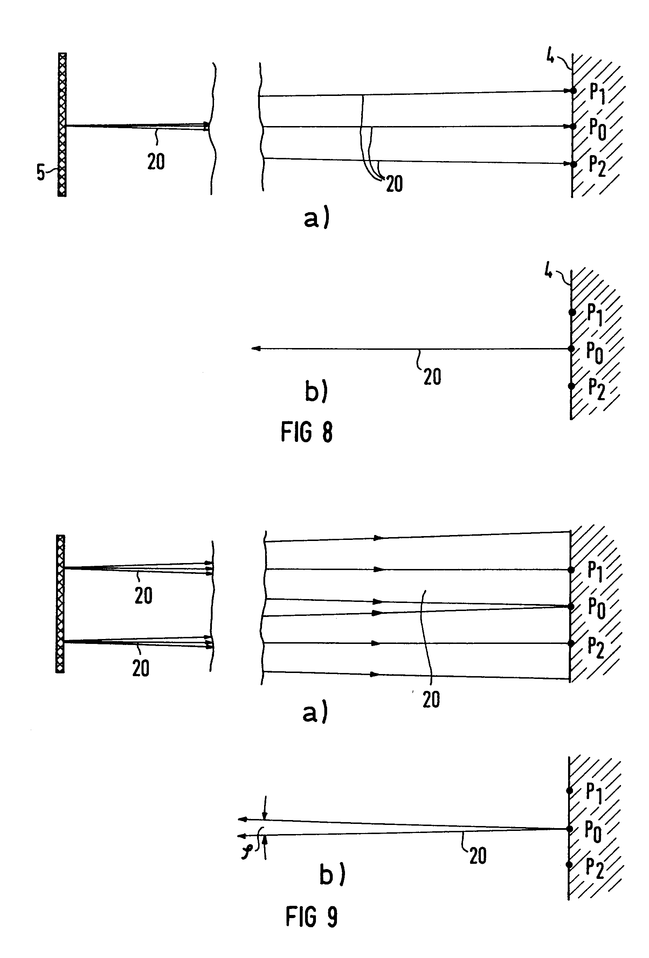

In Figur 7 wird die Abbildung des Punktes P₀ nur durch einen Lichtstrahl 20 vermittelt. Berücksichtigt man, wie im folgenden erläutert wird, die Abhängigkeit der Intensität der Reflexion vom Beobachtungswinkel γ, dann ergibt sich gemäß der Figur 9 bei der Abbildung des Punktes P₀ ein Lichtstrahlbündel mit dem Öffnungswinkel φ.

In der Figur 8 ist nunmehr die Ausleuchtung des Punktes P₀ an der Oberfläche 4 mit Lichtstrahlen 20 aus der ersten Reflexion an P₀ gemäß Figur 7, Teil b) dargestellt. Im Teil a) von Figur 8 weist die Reflexion am Retroreflektor eine Auffächerung auf; im Teil b) ist die zweite Reflexion am Oberflächenpunkt P₀ (vergleiche Figur 7, Teil d)) mit dem Lichtstrahl 20 zum Objektiv 9 und zum Bildsensor 7 der Kamera 6 dargestellt.

In der Figur 9 ist wiederum die Ausleuchtung des Oberflächenpunktes P₀ mit Lichtstrahlen 20 aus der ersten Reflexion an den Punkten P₁ und P₀ gemäß Figur 7, Teil b) aufgezeigt. Im Teil a) von Figur 9 weisen auch hier die Reflexionen am Retroreflektor 5 Auffächerungen auf; gemäß Teil b) von Figur 9 weist die zweite Reflexion am Oberflächenpunkt P₀ hier jedoch einen Öffnungswinkel φ der Lichtstrahlen 20 auf, die vom Objektiv 9 und vom Bildsensor 7 erfaßt werden.

Die Intensität der Reflexion in Abhängigkeit vom Beobachtungswinkel γ wird bei diesem Ausführungsbeispiel zur Vereinfachung entsprechend Figur 6 (Kurve 29) angenommen (Intensität konstant zwischen 0 ^{o} und 1 ^{o}). Fur den Lichtstrahl 20 aus der ersten Reflexion an P₀ ergibt sich nach Reflexion am Retroreflektor 5 gemäß Figur 8 eine Auffächerung, die sich über den Oberflächenbereich von P₁ bis P₂ erstreckt. Für die Lichtstrahlen aus der ersten Reflexion an P₁ und P₂ gemäß Figur 9 ergibt sich somit eine entsprechende, in Figur 9, Teil a) dargestellte Auffächerung. Der Oberflächenpunkt P₀ wird daher auch von Lichtstrahlen ausgeleuchtet, die ursprünglich aus der ersten Reflexion an P₁, P₂ und allen dazwischenliegenden Punkten stammen.

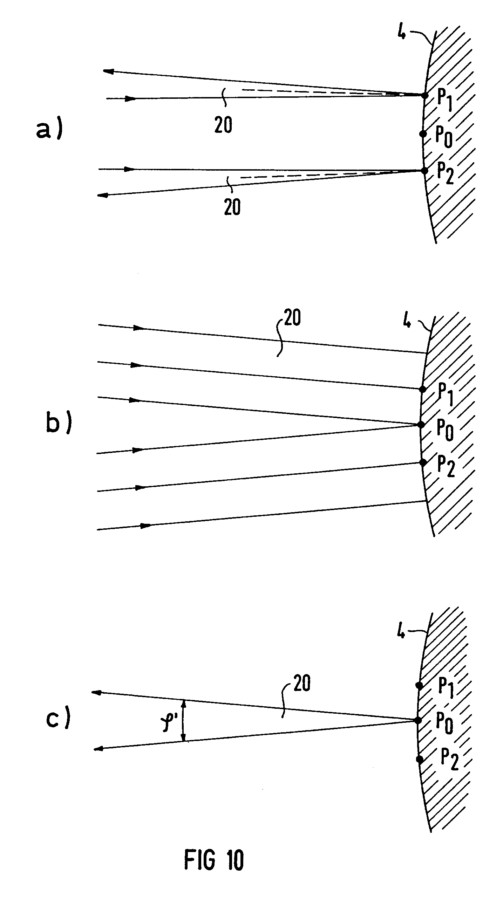

In Figur 10 ist die Strahlenauffächerung der Lichtstrahlen 20 in gekrümmten Bereichen der Oberfläche 4 dargestellt. Im Teil a) sind die Ausleuchtung der Punkte P₁, P₀, P₂ und die erste Reflexion an der Oberfläche dargestellt. Die Lichtstrahlen 20 kommen hier von der nicht dargestellten Lichtquelle 1 und werden in Richtung des Retroreflektors 5 reflektiert. Im Teil b) ist der Verlauf der Lichtstrahlen 20 vom nicht dargestellten Retroreflektor 5 zur Oberfläche 4 nach Auffächerung gezeigt, und im Teil c) ist die zweite Reflexion an der Oberfläche 4 mit den Lichtstrahlen 20 zum Objektiv 9 und zum Bildsensor 7 dargestellt. Die Ausleuchtung des Punktes P₀ geschieht hier in gleicher Weise durch Lichtstrahlen aus der ersten Reflexion an Nachbarpunkten (Figur 9).
Im Unterschied zu ebenen Oberflächenteilen sind die zum Objektiv 9 gerichteten Lichtstrahlen 20 beim Verlauf nach Figur 10 gegenüber der Horizontalen stärker geneigt. Dadurch ergibt sich ein im Vergleich zum Öffnungswinkel φ gemäß Figur 9 größerer Öffnungswinkel φ'.

Es ist somit leicht erkennbar, daß bei der erfindungsgemäßen Anordnung Unebenheiten in der Struktur des zu untersuchenden Objekts zu einer starken Veränderung des Reflexionswinkels bei der Reflexion an der Oberfläche 4 des Objekts führen, wodurch sich eine Änderung des Verlaufs der Lichtstrahlen aus dem Beobachtungswinkel γ mit großer Intensität der Reflexion heraus (siehe Kurven 28 bzw. 29 in der Figur 6) ergeben kann, was eine leichte Detektion dieser Unebenheiten möglich macht.

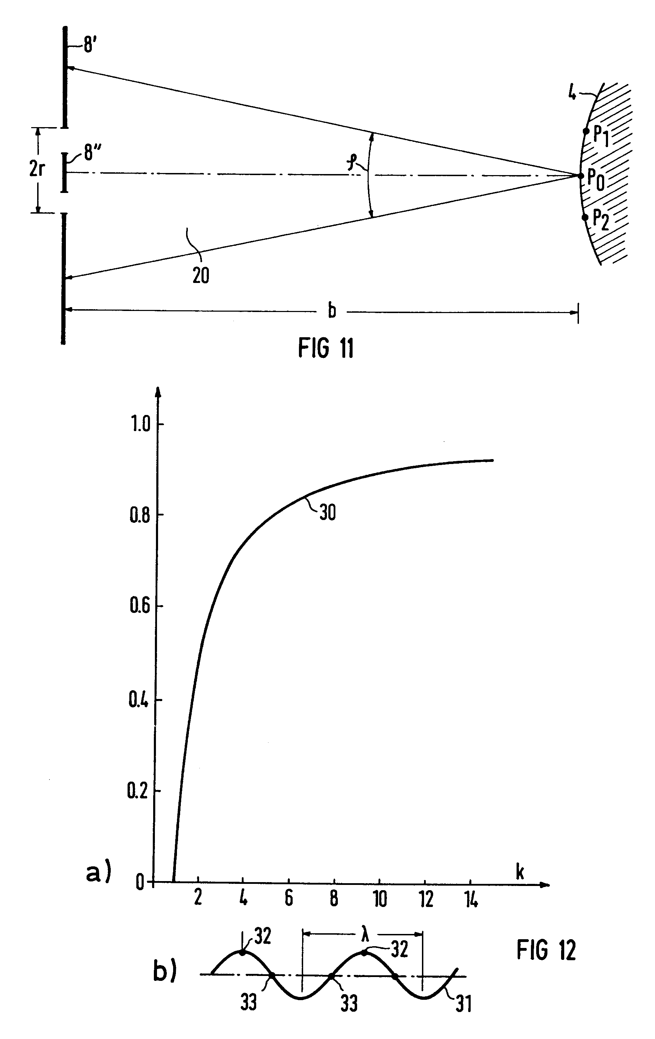

Die Auswirkung auf eine entsprechende Helligkeitsänderung in der Kamera 6 kann, wie in der Figur 11 dargestellt, durch die Objektivblende 8' bei Lichtstrahlen 20 mit unterschiedlichen Öffnungswinkeln φ bzw. φ' beeinflußt werden. Bei kleinem Winkel φ gehen alle Lichtstrahlen eines Punktes (z. B. P₀) durch die Objektivblende 8' und tragen zur Abbildung in dem entsprechenden Bildpunkt (z. B. P₀') bei. Bei großem Öffnungswinkel φ bzw. φ' geht nur noch ein Teil der Lichtstrahlen 20 durch die Objektivblende 8'. Der Bildpunkt erscheint in diesem Falle nur noch mit einer Helligkeit, die dem Verhältnis der Pupillenfläche (Blende) zur Auffächerungsfläche in der Blendenebene entspricht. Die Pupillenfläche ist hier gleich π · r² mit r als Radius der Blendenöffnung, und die Auffächerungsfläche ist bei kleinen Winkeln φ näherungsweise gleich π b² · φ²/4 mit b als Abstand zwischen der Objektivblenda 8' und der Oberfläche 4.

Um gegebenenfalls auch Lichtstrahlen mit kleinerem Öffnungswinkel φ im Objektiv 9 ausfiltern zu können, kann die Objektivblende 8' auch eine Zentralblende 8" aufweisen, die diese Lichtstrahlen vom Bildsensor 7 fernhält. Es ist darüber hinaus auch möglich, die Blende 8 mit einem stetigen Transmissionsverlauf, vorzugsweise in radialer Richtung, zu versehen.

In der Figur 12 ist mit einer Kurve 30 (Teil a)) die optische Hochpaßfilterung bei Retroreflexbeleuchtung einer Modelloberfläche mit Sinusprofil 31 (Teil b)) dargestellt. Im Teil a) ist auf der Ordinate die Durchmodulation des Videosignals der Kamera 6 entsprechend der Amplitudendifferenz (Wendepunkt/Scheitelpunkt) des Sinusprofils dargestellt. Auf der Abszisse ist die Ortsfrequenz k = 2 π/λ des Sinusprofils aufgetragen. Im Teil b) der Figur 12 ist das Sinusprofil 31 mit den Scheitelpunkten 32 und den Wendepunkten 33 gezeigt. Es ist somit aus dieser Figur erkennbar, daß zwischen dem Maß der Krümmung und der Bildpunkthelligkeit im Bildsensor 7 ein Zusammenhang besteht, der besonders bei Welligkeiten hoher Ortsfrequenz - entsprechend kleinen Wellenlängen λ - zu einer großen Durchmodulation des Videosignals führt und somit gut mit der erfindungsgemäßen optischen Anordnung erkennbar ist.

## Patentansprüche

1. Anordnung zur optischen Erfassung räumlicher Unebenheiten in der Oberfläche eines zu untersuchenden Objekts, bei der
- das Objekt von einer Lichtquelle (1) in einem vorgegebenen Winkelbereich beleuchtet ist,
- ein optischer Empfänger (6) mit nachgeschalteter elektronischer Auswerteeinrichtung vorhanden ist, mit der die vom Objekt beeinflußten Lichtstrahlen (2) der Lichtquelle (1) erfaß- und auswertbar sind,
- ein Retroreflektor (5) vorhanden ist, der einen einfallenden Lichtstrahl als im Bereich eines Winkels φ aufgefächertes Strahlenbündel reflektiert und im Strahlengang der Lichtstrahlen (2) derart angeordnet ist, daß
- bei der Untersuchung einer reflektierenden Oberfläche (4) des Objekts die Lichtstrahlen (2) der Lichtquelle (1) von der Oberfläche (4) zum Retroreflektor (5) und von diesem zurück zur Oberfläche und von dort zum optischen Empfänger (6) reflektiert werden,
- zur Ausfilterung von zum zweitenmal an der Oberfläche des zu untersuchenden Objekts reflektierten Lichtstrahlen mit vorgegebenem Öffnungswinkel φ oder mit gegenüber φ vergrößertem Öffnungswinkel φ' eine Blende (8') vor dem optischen Empfänger angeordnet ist,
**dadurch gekennzeichnet,** daß
- die Lichtquelle (1) die Oberfläche (4) des zu untersuchenden Objekts flächenhaft beleuchtet, daß
- der optische Empfänger (6) eine Videokamera zur Erzeugung eines Abbildes der Oberfläche ist, daß
- die Blende (8') in der Blendenebene (8) eines Objektivs (9) der Videokamera und die Blendenebene (8) am Ort des Bildes der Lichtquelle (1) angeordnet ist, daß
- die Blende (8') als Loch- und/oder Zentralblende ausgeführt ist oder einen stetigen Transmissionsverlauf, vorzugsweise in radialer Richtung, aufweist und daß
- der Retroreflektor (5) mit lichtabsorbierenden Punkten oder Streifen (5') rasterförmig bedeckt ist.

2. Anordnung nach Anspruch 1, **dadurch gekennzeichnet,** daß
- der Retroreflektor (5) aus einem mit rasterförmig nebeneinander angeordneten linsenförmigen Glaskörpern versehenen Reflektor gebildet ist.

## Claims

1. Arrangement for the optical detection of spatial unevenness in the surface of an object to be examined, in which
- the object is illuminated by a light source (1) in a predetermined angle zone,
- there is an optical receiver (6) with an electronic evaluation device connected on the output side with which the light rays (2) from the light source (1) affected by the object can be detected and evaluated,
- there is a retroreflector (5) which reflects an incident light ray as a bundle of rays fanned out in the region of an angle φ and is arranged in the ray path of the light rays (2) in such a way that
- when examining a reflecting surface (4) of the object the light rays (2) of the light source (1) are reflected from the surface (4) to the retroreflector (5) and from this back to the surface, and from there to the optical receiver (6),
- for filtering out light rays reflected for the second time on the surface of the object to be examined and having the predetermined opening angle φ or an opening angle increased with respect to φ' a diaphragm (8') is arranged in front of the optical receiver,
characterised in that
- the light source (1) illuminates as an area the surface (4) of the object to be examined, in that
- the optical receiver (6) is a video camera for producing an image of the surface, in that
- the diaphragm (8') is arranged in the diaphragm plane (8) of a lens (9) at the location of the image of the light source (1), in that
- the diaphragm (8') is formed as an aperture- and/or central diaphragm or has a constant transmission course, preferably in the radial direction, and in that
- the retroreflector (5) is covered with light-absorbing dots or strips (5') in a grid shape.

2. Arrangement according to claim 1, characterised in that
- the retroreflector (5) is formed from a reflector provided with lens-shaped glass bodies arranged adjacently in a grid.

## Revendications

1. Dispositif pour la détection optique d'inégalités spatiales de la surface d'un objet à tester, dans lequel
- l'objet est éclairé par une source lumineuse (1) dans une zone angulaire déterminée à l'avance,
- il est prévu un récepteur optique (6) à dispositif électronique d'évaluation monté en aval, et à l'aide duquel les rayons lumineux (2) de la source lumineuse (1), influencés par l'objet, sont susceptibles d'être détectés et évalués,
- il est prévu un rétroréflecteur (5) qui réfléchit un rayon lumineux incident sous la forme d'un faisceau lumineux déployé en éventail sous un angle φ, et qui est disposé dans la trajectoire des rayons lumineux (2) de telle manière que
- lors de l'examen d'une surface (4) réfléchissante de l'objet, les rayons lumineux (2) de la source lumineuse (1) sont réfléchis par la surface (4) vers le rétroréflecteur (5) et sont réfléchis par ce dernier vers la surface et de celle-ci, vers le récepteur optique (6),
- pour le filtrage des rayons lumineux réfléchis pour la seconde fois à la surface de l'objet à tester et ayant un angle d'ouverture φ déterminé à l'avance ou un angle d'ouverture φ' agrandi par rapport à φ, un diaphragme (8') est placé devant le récepteur optique,
caractérisé en ce que
- la source lumineuse (1) éclaire la surface (4) de l'objet à tester suivant une aire de celle-ci, en ce que
- le récepteur optique (6) est une caméra vidéo pour former une image de la surface, en ce que
- le diaphragme (8') est placé dans le plan-diaphragme (8) d'un objectif (9) de la caméra vidéo et le plan-diaphragme (8) est disposé à la place de l'image de la source lumineuse (1), en ce que
- le diaphragme (8') est réalisé sous la forme d'un diaphragme perforé et/ou à ouverture centrale, ou présente une allure continue de la transmission, de préférence en direction radiale, et en ce que
- le rétroréflecteur (5) est recouvert de points ou de bandes (5') absorbant la lumière et disposés en trames.

2. Dispositif selon la revendication 1, caractérisé en ce que
- le rétroréflecteur (5) est formé d'un réflecteur muni de corps de verre lenticulaires, placées les uns à côté des autres à la manière d'une trame.
